# EUROPEAN PATENT APPLICATION

(11) **EP 3 082 207 A1**
(43) Date of publication of application: **19.10.2016**
(21) Application number: 15163543.0
(22) Date of filing: 14.04.2015
(51) Int. Cl.: H02H 1/00, H02H 7/26, H04L 29/06, H04L 12/801

(54) **METHOD FOR TRANSMITTING A TELEPROTECTION COMMAND USING SEQUENCE NUMBER**

(71) Applicant: ABB Technology AG, 8050 Zürich (CH)
(72) Inventor: Notter, Allen, 5105 Auenstein (CH); Israel, Martin, 4535 Hubersdorf (CH); Pogorilyy, Volodymyr, 5200 Brugg (CH)
(74) Representative: ABB Patent Attorneys

(57) **Abstract**

The present invention is concerned with the field of utility communication, in particular to communication of teleprotection commands between a first node including a sender sequence number and a second node including a receiver sequence number over an Ethernet based communication network. The method comprises the steps of: (a) sending, by the first node using a connectionless communication, a data packet including the teleprotection command and the sender sequence number to the receiver node; (b) comparing, by the second node, the sender sequence number with the receiver sequence number upon receiving the data packet; (c) validating the data packet when the sender sequence number equals or is larger than the receiver sequence number; (d) establishing a data connection from the first to the second node; and (e) increase the sender and receiver sequence number by a same predetermined number N = {1, 2, 3...}.

## Description

### FIELD OF THE INVENTION

The invention relates to the field of utility communication, in particular to communication of teleprotection commands, e.g. real time operational data between distant sites of an electric power utility enterprise.

### BACKGROUND OF THE INVENTION

Electric power utilities or transmission system operators own and operate electric power transmission networks interconnecting sites, such as power sources and substations, which despite being distant from each other some 100 km or more, have to be coordinated in one way or the other. Across their utility communication systems, a variety of messages such as teleprotection messages are transferred over long distance communication links between distant sites of the utility in order to safely transmit and distribute electric energy.

EP 2 387 829 discloses for example a method for transmitting the teleprotection messages, where the A communication channel is being monitored based on regular network traffic, i.e. by evaluating messages or data packets carrying real-time operational data as a payload.

The conventional approach considers handling bit errors, e.g. using error detection or error correction schemes. With the shift to Ethernet based backbone networks new requirements for the transmission regarding cyber security have emerged, i.e. when transmitting teleprotection data including at least one teleprotection command over an Ethernet based network, cyber security is an important aspect. However, due to their structures and the lack of built-in security Ethernet based networks are prone to attacks like man-in-the-middle, denial-of-service and replay. Therefore, there is a need to ensure the authenticity and the integrity of packets containing teleprotection data.

A state-of-the-art communication security protocol for TCP/IP networks is TLS/SSL. In TLS/SSL sessions are established were session keys are used. In order to share the common session key asymmetric private and public keys can be used. However, using encryption in the TLS/SSL is not preferred for the transmission of teleprotection data, due to the following reasons: (i) the teleprotection commands included in the teleprotection data should be transmitted with a short delay, while the encryption with its high processing delay is in contrast to this requirement; (ii) the TLS/SSL requires asymmetric cryptography provided by X.509 certificates, i.e. handling of certificates brings additional effort and is not always available in the infrastructure; and (iii) the teleprotection data is not confidential which means encryption is not essential.

IPsec is another state-of-the-art communication security protocol for Ethernet based networks. It operates in the network layer i.e. IP, in opposition to TLS/SSL which operates in the transport layer i.e. TCP. For the same reason, IPsec is not preferred for the transmission of teleprotection data.

### DESCRIPTION OF THE INVENTION

It is therefore an objective of the invention to provide a method with improved cyber security for transmission of teleprotection commands over packet-switched networks. This objective is achieved by a method and a device according to the independent claims. Preferred embodiments are evident from the dependent patent claims.

The present invention provides a method for transmitting a teleprotection command between a first node including a sender sequence number and a second node including a receiver sequence number over an Ethernet based communication network, wherein the method comprises the steps of: (a) sending, by the first node using a connectionless communication, a data packet including the teleprotection command and the sender sequence number to the receiver node, (b) comparing, by the second node, the sender sequence number with the receiver sequence number upon receiving the data packet, (c) validating the data packet when the sender sequence number equals or is larger than the receiver sequence number, (d) establishing a data connection from the first to the second node if the validation is successful, and (e) increase the sender and receiver sequence number by a same predetermined number N = {1,2, 3...}. In a preferred embodiment, the sequence numbers are increased by 1 respectively, after each successful transmission.

Preferably, the method further comprises the step of: adopting the receiver sequence number with the sender sequence number if the sender sequence number is larger than the receiver sequence number; and persistently storing the receiver sequence number by the second node.

In case the first node as the sender node has been restarted or newly installed and powered on, it does not have the sender sequence number previously used for the communication with the second node, i.e. the first node needs to be reinitialised prior to the above step (a). Therefore, according to a preferred embodiment, the method further comprises the following initialisation steps of: sending, by the first node, a guard packet including an initialisation sequence number to the second node; responding, by the second node, with an initialisation packet including a unique node address of the second node and the receiver sequence number to the first node; and adopting, by the first node, the sender sequence number with the receiver sequence number. Optionally, a guard packet may periodically be sent from the first to second node, in order to monitor the communication channel. If the teleprotection commands, i.e. the teleprotection data payload, are changed, the interval of sending the guard packet can be increased.

Similarly, the second node as the receiver node might be restarted or powered on after replacement. In this case the receiver sequence number may become higher as the sender sequence number, i.e. the receiver sequence number may include an offset number n added by the second node due to the time needed for storing a sequence number persistently and for the restart. In order to initialise the second node, the method preferably further comprises the steps of: sending, by the first node, a guard packet including a sender sequence number to the second node; responding, by the second node, with an initialisation packet including a unique node address of the second node and the receiver sequence number to the first node; and adopting, by the first node, the sender sequence number with the receiver sequence number. Similarly, a guard packet may optionally be sent from the second to the first node. If there is no offset is added, the first guard packet is valid and no initialization packet is needs to be sent.

According to a preferred embodiment of the present invention, the connectionless communication uses a connectionless transport protocol on the Transport Layer or is performed directly on the Data Link Layer.

According to a preferred embodiment of the present invention, the first node further includes a receiver sequence number and the second node further includes a sender sequence number, for establishing a data connection from the second to the first node. This is usually the case, since the first node not only sends but also receives teleprotection commands at same time. Therefore, each of the first and second node includes two sequence numbers, i.e. the sender and receiver sequence number, thereby enabling a bi-directional transmission between the first and second node.

According to a preferred embodiment of the present invention, the method further comprises the step of: hashing the teleprotection command and the sender sequence number, preferably also the unique node address, using a pre-shared key that is known by the second node.

According to a preferred embodiment of the present invention, the method further comprises the step of: encrypting the teleprotection command and the sender sequence number using a pre-shared key that is known by the second node.

The present invention also relates to a computer program product including computer program code for transmitting the teleprotection commands between the first and second nodes using the sender and receiver sequences, particularly, a computer program product including a computer readable medium containing therein the computer program code.

The invented method defines the exchange of sequence numbers between a sending and a receiving node in a way that at normal operation, initial setup and for maintenance the desired traffic flow between the nodes is ensured while it impedes an attacker to fake or replay packets. Therefore, the exchanged packets between two teleprotection devices contain the teleprotection data and a protocol header. The protocol header may contain three security related fields:

### Sequence number

Each teleprotection device stores an expected sequence number, e.g. a receiver sequence number. This expected sequence number defines the sequence number that a packet has to contain in order to be accepted. If the sequence number of a received packet is smaller than the expected sequence number, the packet is discarded and no data connection is established. In other words, if a sender node sends a data packet including a sender sequence number smaller than the receiver sequence number on the receiver node, this data packet is considered to be invalid. In this case, an initialization packet can be sent from the receiver node to the sender node, in order to communicate the expected sequence number, i.e. the receiver sequence number of the receiver node. The sender node is then able to generate a packet with a valid sequence number.

After receiving a valid packet, the receiver sequence number will be increased by 1. The same applies to the sender sequence number at the sender node. The receiver sequence number can be stored persistently on the receiver node. After a restart of the sender or receiver node, the sender sequence number continues and no replay attacks with older packets containing smaller sequence numbers are possible. Both sender and receiver sequence numbers are continuously numerated and can become very large with increased number of transmissions.

### Hash

A keyed-hash can be calculated over the teleprotection data and the protocol header with the pre-shared key. Thus, a manipulation can be recognized by recalculating the hash and comparing it with the one in the packet. If they are unequal, the data packet can be also considered as invalid, in addition to the comparison of the sender and receiver sequence number. In other words, this is a further mechanism for authenticating the validity of the data packets and can be performed either independently of the comparison of sequence numbers or in combination.

### Node address

Each node has a unique address, i.e. the teleprotection or TP node address. The data packets contain a field where the TP node address of the intended receiver has to be filled in. Thus, each packet is only valid for exactly one node and no replay attacks with packets from other links are possible.

The method according to the present invention can either be implemented on the transport layer using UDP or on the data link layer. The latter option eases the implementation in programmable logic because no IP stack is required. Further, the packet payload, i.e. the teleprotection command can be also encrypted, instead of inserting a keyed-hash.

In order to achieve a high processing and transmission speed either a connectionless transport protocol like UDP may be used or the transmission may be done directly on the data link layer. Since there is no guarantee in a connectionless protocol that packets reach the receiver, a sequence number is used. Unlike other solutions this sequence number is handled in a special way, i.e. the sequence number may be persistently stored on the receiver and transmitted to the remote device during initialization; and each device memorizes the highest sequence number received with a valid packet. Any received packets with lower sequence numbers are discarded. This prevents replay attacks even after resetting or replacing devices.

Furthermore, the present invention has the following preferred advantages:
The initialization of the communication is very fast and is not redone as long as the devices are not restarted. Hence, after a link interruption the connection instantly continuous without any initialization, thereby avoiding unnecessary administrative effort. If an initialisation is required due to restart of a node, the present invention also provides the initialisation method as described before.

The present invention does not have special requirements to the infrastructure, i.e. no certificate handling is necessary as the method works with pre-shared keys.

### BRIEF DESCRIPTION OF THE DRAWINGS

The subject matter of the invention will be explained in more detail in the following text with reference to preferred exemplary embodiments which are illustrated in the attached drawings, in which:
Fig. 1 schematically shows the first and second nodes in the communication network, each node is provided with a sender and receiver sequence number;
Fig. 2 schematically shows establishing a data connection for sending the teleprotection command by the first node;
Fig. 3 schematically shows establishing a data connection for receiving the teleprotection command by the first node;
Fig. 4 schematically shows the initialisation of the first node after it being restarted;
Fig. 5 schematically shows the initialisation of the second node after it being restarted;
Fig. 6 schematically shows the initialisation of the second node after it being restarted, where the receiving sequence of the second node includes an offset; and
Fig. 7 schematically shows the initialisation phase for a sender and receiver node in the bi-directional communication.

The reference symbols used in the drawings, and their primary meanings, are listed in summary form in the list of designations. In principle, identical parts are provided with the same reference symbols in the figures.

### DETAILED DESCRIPTION OF PREFERRED EMBODIMENTS

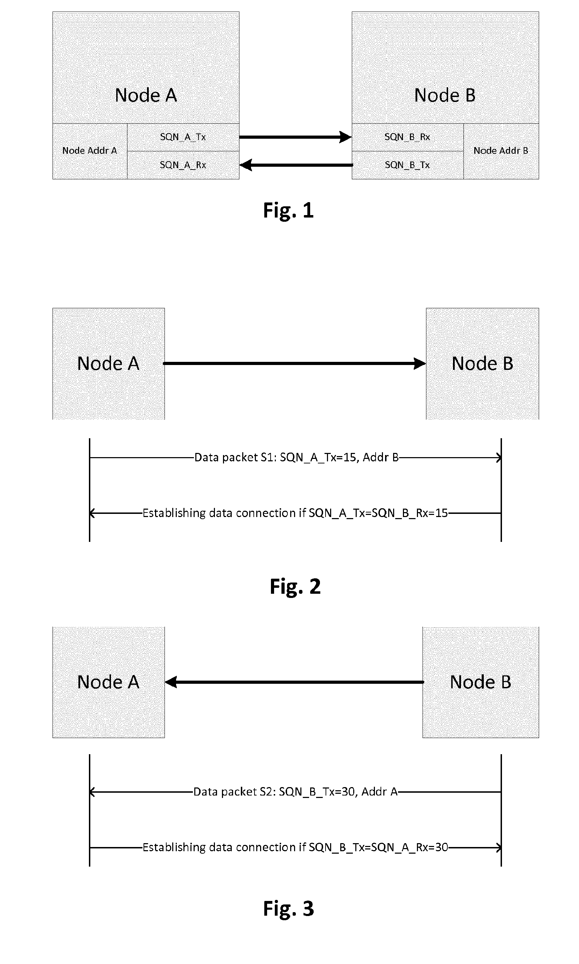

Fig.1 shows the exchange of sequence numbers between a node A and a node B, where both nodes are capable to send and receive teleprotection commands. In the transmission direction from node A to node B, the node A being sender exchanges its sender sequence with the receiver sequence of node B. In the transmission direction from the node B to A, the node B being the sender exchanges its sender sequence with the receiver sequence if the node A.

Fig. 2 shows the node A establishes a data connection for sending the teleprotection command from node A to B. In step S1, the node A sends a data packet including the sender sequence number SQN A Tx having a value of 15 and the unique node address of the node B. Upon receiving the data packet, the node B compares if the sender sequence number of the node A equals or is large than the receiver sequence number SQN_B_Rx of the node B. In the normal operation the receiver sequence number is also 15, i.e. it equals the sender sequence number. In this case, the data packet will be considered as valid, and the data connection from the node A to B can be established.

If the sender sequence number SQN_A_Tx is larger than the receiver sequence number SQN_B_Rx, the data packet is also considered as valid. In this case, however, the receiver sequence SQN_B_Rx will be adopted with the sender sequence number SQN_A_Tx. Accordingly, the sender sequence number SQN_A_Tx equals the receiver sequence number for the further communication.

If the sender sequence number SQN_A_Tx is smaller than the receiver sequence number SQN_B_Rx, the data packet can be considered as invalid. For instance, this data packet is replayed from an attacker.

Fig. 3 shows the node B establishes a data connection for receiving the teleprotection command from node B to A. In step S2, the node B sends a data packet including the sender sequence number SQN_B_Tx having a value of 30 and the unique node address of the node A. Upon receiving the data packet, the node A compares if the sender sequence number of node B equals or is large than the receiver sequence number SQN_A_Rx of the node A. In the normal operation the receiver sequence number of the node A is also 30, i.e. it equals the sender sequence number. In this case, the data packet will be considered as valid, and the data connection from the node B to A can be established.

If the sender sequence number SQN_B_Tx is larger than the receiver sequence number SQN_A_Rx, the data packet is also considered as valid. In this case, however, the receiver sequence SQN_A_Rx will be adopted with the sender sequence number SQN_B_Tx. Accordingly, the sender sequence number SQN_B_Tx equals the receiver sequence number for the further communication.

If the sender sequence number SQN_B_Tx is smaller than the receiver sequence number SQN_A_Rx, the data packet can be considered as invalid. For instance, this data packet is replayed from an attacker.

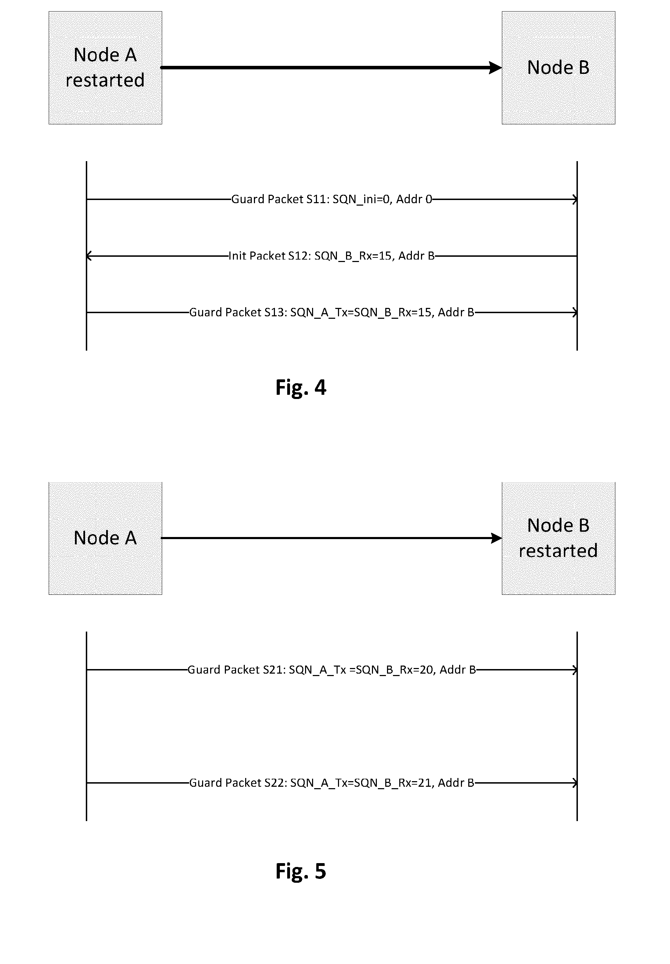

Fig. 4 shows the initialisation stage of the node A when it has been restarted or newly replaced and powered on. In this case, node A does not know which sequence number it should include the data packet. Therefore, it sends in step S11 a guard packet including an initialisation sequence number having the value 0 and an initialisation node address of node B, e.g. empty address. Upon receiving the guard packet, the node B responded in step S12 with an initialisation packet including a receiver sequence number SQN_B_Rx=15 and its node address. The node A sets the sender sequence number SQN_A_Tx= SQN_B_Rx=15. Then, it includes adopted sender sequence number and the node address of the node B into a guard packet and establishes a data connection between node A and B.

Fig. 5 shows the initialisation stage of the node B when it has been restarted. In this case, node A sends a guard packet including the sender sequence number SQN_A_Tx=20 and the node address of the node B. Since the node B persistently stored the receiver sequence number before, it has a receiver sequence number SQN_B_Rx as the sender sequence number SQN_A_Tx after the restart. Therefore, no initialisation packet or adaptation of the sequence number and is required here. The data connection can be established.

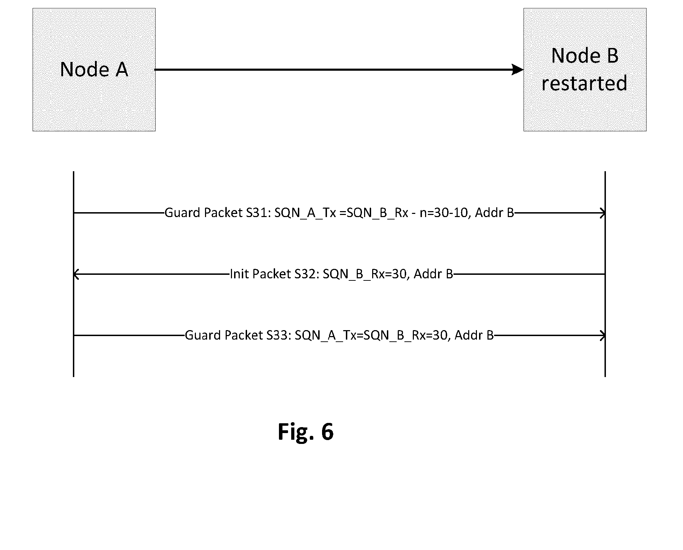

Fig 6 shows that the node B has an offset number 10, which is an inconsistency due to time during the restart. In this case, the sender sequence number SQN_A_Tx=20 sent by the node A is smaller than the receiver sequence number SQN_B_Rx=30. Accordingly, the node B sends an initialisation packet including the receiver sequence number SQN_B_Rx=30 and its node address to the node A. Similarly as in Fig. 4, the node A sets the sender sequence SQN_A_Tx= SQN_B_Rx=30 in a guard packet and sends to the node B, thereby the data connection can be established.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. Method for transmitting a teleprotection command between a first node including a sender sequence number and a second node including a receiver sequence number over an Ethernet based communication network, wherein the method comprises the steps of:
(a) sending, by the first node using a connectionless communication, a data packet including the teleprotection command and the sender sequence number to the receiver node;
(b) comparing, by the second node, the sender sequence number with the receiver sequence number upon receiving the data packet;
(c) validating the data packet when the sender sequence number equals or is larger than the receiver sequence number;
(d) establishing a data connection from the first to the second node; and
(e) increase the sender and receiver sequence number by a same predetermined number N = {1,2,3...}.

2. Method according to claim 1, further comprises the step of:
adopting the receiver sequence number with the sender sequence number if the sender sequence number is larger than the receiver sequence number; and
persistently storing the receiver sequence number by the second node.

3. Method according to claim 1 or 2, wherein, for initializing of the first node prior to step (a), the method further comprises the steps of:
sending, by the first node, a guard packet including an initialisation sequence number to the second node;
responding, by the second node, with an initialisation packet including a unique node address of the second node and the receiver sequence number to the first node; and
adopting, by the first node, the sender sequence number with the receiver sequence number.

4. Method according to claim 1 or 2, wherein the receiver sequence number includes an offset number n added by the second node, and wherein, for initializing of the send node prior to step (a), the method further comprises the steps of:
sending, by the first node, a guard packet including a sender sequence number to the second node;
responding, by the second node, with an initialisation packet including a unique node address of the second node and the receiver sequence number to the first node; and
adopting, by the first node, the sender sequence number with the receiver sequence number.

5. Method according to any one of preceding claims, wherein the connectionless communication uses a connectionless transport protocol on the Transport Layer or is performed directly on the Data Link Layer.

6. Method according to any one of the preceding claims, wherein the first node further includes a receiver sequence number and the second node further includes a sender sequence number, for establishing a data connection from the second to the first node.

7. Method according to any one of preceding claims, further comprising the step of:
hashing the teleprotection command and the sender sequence number using a pre-shared key that is known by the second node.

8. Method according to any one of preceding claims, further comprising the step of:
encrypting the teleprotection command and the sender sequence number using a pre-shared key that is known by the second node.

9. Computer readable medium including a computer program for transmitting the teleprotection commands according to any one of claims 1 to 8.
